Europäisches Patentamt

European Patent Office

Office européen des brevets

(11) Numéro de publication: **0 145 593**
**B1**

(12) **FASCICULE DE BREVET EUROPEEN**

(45) Date de publication du fascicule du brevet:
**28.10.87**

(21) Numéro de dépôt: **84402496.8**

(22) Date de dépôt: **05.12.84**

(51) Int. Cl.⁴: **F 16 D  55/224,** F 16 D  65/02

(54) **Ensemble patin et support de couple pour frein à disque.**

(30) Priorité: **15.12.83  FR 8320093**

(43) Date de publication de la demande:
**19.06.85 Bulletin 85/25**

(45) Mention de la délivrance du brevet:
**28.10.87 Bulletin 87/44**

(84) Etats contractants désignés:
**BE DE GB IT NL SE**

(56) Documents cités:
**EP - A - 0 027 714**
**EP - A - 0 080 950**
**DE - A - 1 954 332**
**FR - A - 1 353 849**
**FR - A - 1 360 566**
**FR - A - 1 484 078**
**FR - A - 1 518 748**
**FR - A - 2 085 932**
**FR - A - 2 316 844**
**FR - A - 2 325 298**

(73) Titulaire: **BENDIX France, 126, rue de Stalingrad,
F-93700 Drancy (FR)**

(72) Inventeur: **Mery, Jean-Claude, 61, rue Emile Zola,
F-93320 Pavillons-sous-Bois (FR)**
Inventeur: **Sauvee, Jean-Paul, 76, Boulevard Félix Faure,
F-93300 Aubervilliers (FR)**
Inventeur: **Thioux, Alain, 9, Allée des Bordes,
F-94430 Chennevieres (FR)**

(74) Mandataire: **Poidatz, Emmanuel et al, Service Brevets
Bendix 44 rue François 1er, F-75006 Paris (FR)**

ACTORUM AG

## Description

La présente invention a pour objet un ensemble patin et support de couple pour frein à disque comportant un étrier coulissant sur un support fixe au moyen d'au moins une colonnette axiale.

Le document EP-A-0080950 représente et décrit un frein à disque comportant un étrier monté coulissant sur un support fixe au travers d'une colonnette axiale unique. Ce frein comporte deux éléments de friction décalés tangentiellement de part et d'autre d'un plan radial passant par l'axe du moteur de frein permettant ainsi de corriger l'usure différentielle sur les éléments de friction interne et externe. Un montage incorrect de ces éléments de friction provoqueraient une usure différentielle accrue et c'est pourquoi les éléments de friction comportent des dispositifs de détrompage garantissant un montage correct des éléments de friction, c'est-à-dire un décalage des éléments de friction l'un par rapport à l'autre dans le sens voulu. Ceci est obtenu grâce à un système de détrompage interdisant le montage incorrect du patin intérieur et du patin extérieur. Néanmoins ce détrompage est valable pour un frein et le frein symétrique doit comporter des patins eux-mêmes symétriques pour respecter le décalage des patins dans le sens voulu. Une confusion entre les patins du frein droit et les patins du frein gauche provoquera un montage inversé des décalages et l'usure différentielle, c'est-à-dire l'usure un biais dans le sens longitudinal des patins n'en sera qu'accentuée.

L'invention a pour but de proposer un ensemble patin et support de couple pour frein à disque présentant tous les avantages des patins décalés dans le bon sens et dans lequel le risque de mauvais montage des éléments de friction est éliminé. Tous les patins étant identiques un mauvais montage de ceux-ci devient impossible, même pour un non spécialiste. De plus grâce à l'invention l'ensemble frein est moins lourd et moins cher à fabriquer et l'entretien est simplifié. Du fait le patin est unique.

Pour ce but l'invention propose un ensemble patin et support de couple pour frein à disque comportant un étrier coulissant sur un support fixe au moyen d'au moins une colonnette axiale s'étendant parallèlement à l'axe du disque, un moteur de frein agissant directement sur un élément de friction interne et, par réaction au travers de l'étrier, sur un élément de friction externe, lesdits éléments de friction étant décalés tangentiellement de part et d'autre d'un plan radial (Pr) passant par l'axe du moteur de frein, caractérisé en ce que les éléments de friction sont identiques, chacun comprenant des première et deuxième paires de surfaces d'ancrage et de coulissement coplanaires et décalées radialement l'une par rapport à l'autre, coopérant respectivement avec des première et deuxième paires de surfaces conjuguées formées dans ledit support de couple, la première paire de surface d'ancrage de l'élément de friction interne coopérant avec une première paire de surfaces conjuguées formées dans le support fixe tandis que la deuxième paire de surface d'ancrage de l'élément de friction externe coopère avec une deuxième paire de surfaces conjuguées formées dans l'étrier.

On comprend que grâce à une telle structure, selon le décalage que l'on veut obtenir, celui-ci sera obtenu par décalage des surfaces conjuguées formées sur le support de couple et, selon le décalage tangentiel voulu, les éléments de friction seront ancrés soit par la première paire soit par la deuxième paire des surfaces d'ancrage et de coulissement.

Selon une autre caractéristique de l'invention, l'ensemble patin et support de couple comporte des moyens de maintien qui empêchent l'échappement radial des éléments de friction par rapport au dit support de couple.

D'autres caractéristiques et avantages de l'ensemble patin et support de couple, objet de la présente invention, apparaîtront à la lecture de la description détaillée qui se réfère aux dessins annexés dans lesquels:

la Figure 1 est une vue de dessus d'un frein à disque réalisé conformément aux enseignements de la présente invention et comportant des portions présentées en coupe;

la Figure 2 est une vue de face du frein à disque selon la flèche A de la Figure 1;

la Figure 3 est une vue d'un élément de friction réalisé conformément à l'invention;

la Figure 4 est une vue similaire à la Figure 1 pour un deuxième mode de réalisation de l'invention;

la Figure 5 est une vue de face du frein de la Figure 4;

la Figure 6 est une vue de deux éléments de friction tels qu'ils seront placés dans le frein de la Figure 5.

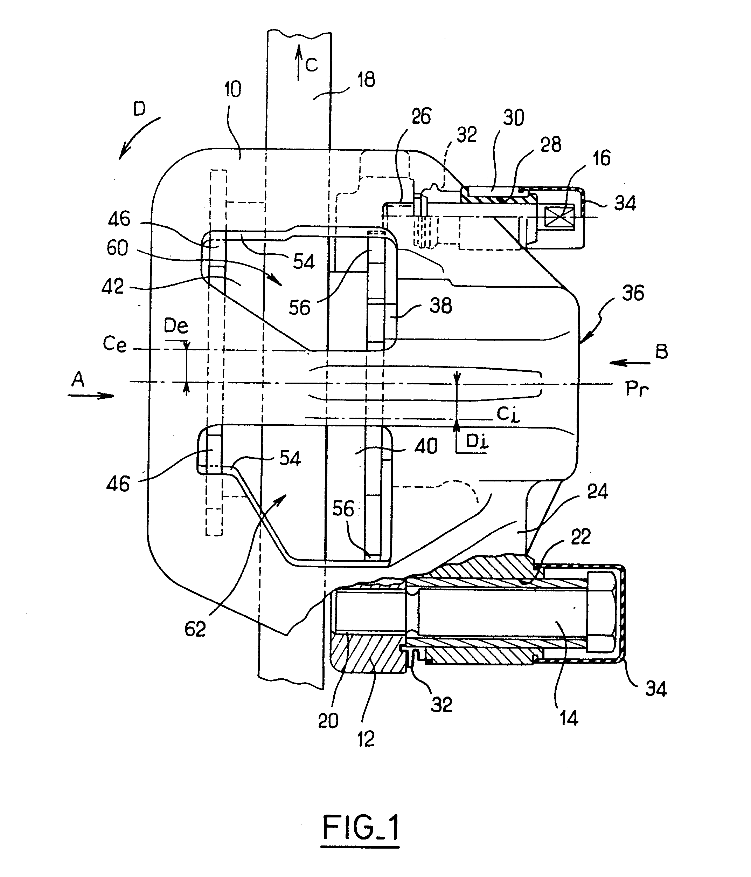

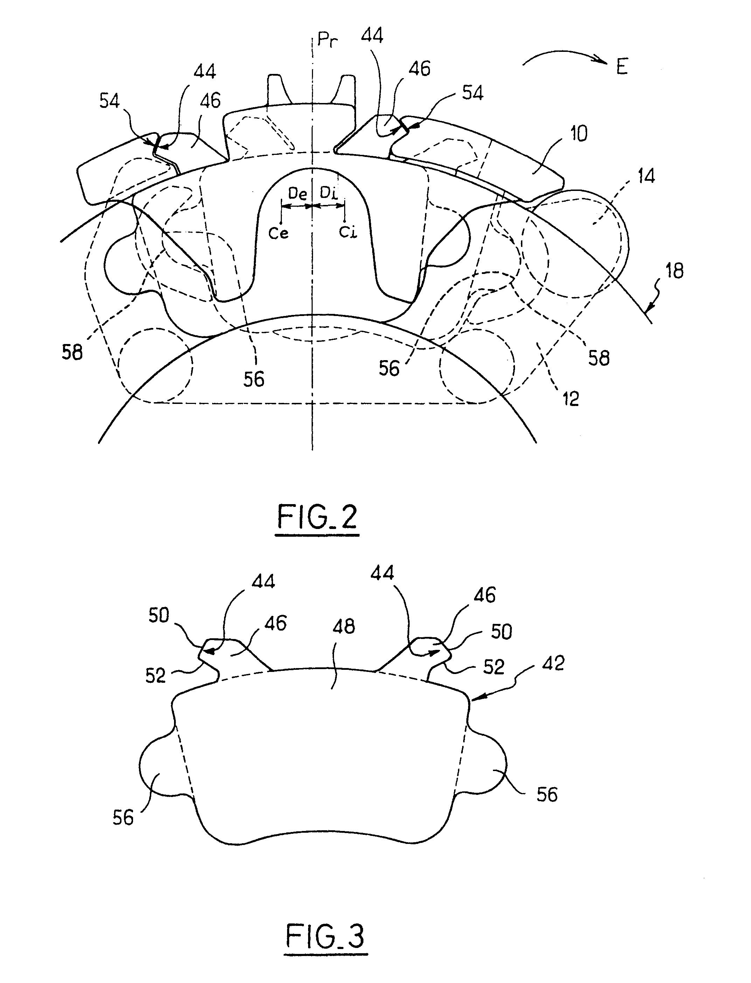

Le frein à disque représenté sur les Figures 1 à 3 comprend un étrier mobile 10 monté coulissant sur un support fixe 12. L'étrier 10 est monté coulissant sur le support fixe 12 au moyen de deux colonnettes 14 et 16 s'étendant parallèlement à l'axe de rotation du disque tournant 18. Comme le montre plus particulièrement la Figure 1 la colonnette axiale 14 est fixée au support fixe 12 par une liaison filetée. La colonnette axiale 14 est reçue en coulissement dans un alésage cylindrique 22 formé dans un bras 24 de l'étrier 10. De même la colonnette 16 fixée au support fixe 12 au moyen d'une liaison filetée 26 est reçue en coulissement dans un alésage 28 formé dans un bras 30 de l'étrier 10. On remarquera la dissymétrie des colonnettes 14 et 16, l'une 14 recevant une partie de couple de freinage, l'autre 16 simplement destinée à maintenir l'étrier par rapport au support fixe 12. Des soufflets 32 et capuchon 34 sont prévus sur chacune des colonnettes pour protéger les surfaces de coulissement. Un moteur de frein désigné dans son ensemble par la référence 36 comporte d'une façon conventionelle un piston 38 susceptible d'être sollicité dans le sens de la flèche B lorsque du fluide sous pression est introduit dans une chambre du moteur de frein (non représentée). Le piston 38 est susceptible d'agir directement sur un élément de friction interne 40 et par réaction au travers de l'étrier coulissant 10 sur un élément de friction externe 42 pour provoquer un engagement de friction des éléments 40 et 42 sur les faces opposées du disque 18. En désignant par Pr le plan radial passant par le centre du moteur de frein 36 on voit en particulier sur les Figures 1 et 2 que le centre Ce de l'élément de friction extérieur 42 est décalé par rapport au plan Pr d'une valeur De dans la direction de la flèche C qui correspond à la rotation dans le sens de la marche avant du disque 18. De même le centre Ci de l'élément de friction interne 40 est décallé d'une valeur Di par rapport au plan Pr dans la direction inverse à la flèche C. Les valeurs de De et de Di sont égales et placées de part et d'autre du plan radial Pr et on comprend que l'engagement de friction des 2 éléments de friction avec le disque tournant crée un couple dans le sens de la flèche D de la Figure 1 corrigeant ainsi l'usure différentielle pour chacun des éléments de friction. Ce phénomène de correction est largement expliqué dans le document européen précité et ne sera pas développé davantage présentement.

Conformément à l'invention, chacun des éléments de friction 40 et 42 comporte deux paires de surfaces d'ancrage et de coulissement. En se reportant aux Figures 2 et 3 on voit que chaque élément de friction comporte une première paire de surfaces d'ancrage et de coulissement 44 formée sur des oreilles 46 dépassant radialement vers l'extérieur par rapport à un corps 48 formé sur le porte garnitures de l'élément de friction. La première paire de surfaces d'ancrage et de coulissement 44 est formée par deux surfaces inclinées 50 et 52 circonférentiellement espacées deux à deux et pénétrant dans des rainures 54 formées dans l'étrier 10. Ces rainures 54 présentent des formes conjuguées aux surfaces 50 et 52 de l'élément de friction et forment ainsi la première paire de surfaces 50 et 52 de l'élément de friction et forment ainsi la première paire de surfaces conjuguées formée sur le support de couple qui pour ce patin est formé par l'étrier 10 comme on le voit sur la Figure 1. Il est bien entendu que les rainures 54 sont elles-mêmes décalées par rapport au plan radial de la même valeur De comme indiqué précedemment. En se reportant à la Figure 3, on voit que l'élément de friction 42 comporte également deux saillies circonférentiellement espacées 56 formées dans le mode de réalisation représentée par des portions de cercles. Ces saillies 56 forment la deuxième paire de surfaces d'ancrage et de coulissement. Pour l'élément de friction intérieur 40 cette seconde paire 56 coopère avec des rainures 58 de formes conjuguées et formées dans le support fixe 12. Ces rainures 58 forment ainsi la deuxième paire conjuguée réalisée dans le mode représenté dans le support fixe 12 qui joue pour l'élément de friction intérieur le rôle de support de couple. Les rainures 58 sont également décalées par rapport au plan radial Pr de la valeur Di du côté opposé au décallage précédent De de l'élément de friction extérieur. Comme on le voit, les rainures 54 et 58, présentant des creux, forment avec les saillies 44 et 56 des moyens de maintien s'opposant à l'échappement radial des éléments de friction.

En se reportant à la Figure 1, on voit que l'étrier 10 comporte deux ouvertures radiales 60 et 62 qui permettent à l'élément de friction intérieur 40 de coopérer avec le fixe 12 au moyen des saillies 56 sans que les saillies 46 ne coopèrent avec l'étrier 10, comme représenté en pointillés sur la Figure 2. On notera que pour l'autre frein du même essieu, symétrique par rapport au frein représenté sur la Figure 1, comme l'étrier et le support fixe seront également symétriques on obtiendra une symétrie 2 à 2 des deux patins extérieurs entre eux et des deux patins intérieurs entre eux par rapport à l'axe longitudinal du véhicule. Et ceci toujours avec des patins identiques tels que représentés sur la Figure 3.

Le montage du frein et des éléments de friction se fait de la manière suivante: l'étrier 10 est préalablement équipé de son moteur de frein 36 et de ses colonnettes 14 et 16, les protecteurs 34 étant enlevés. Le véhicule étant équipé du support fixe 12 on visse la colonnette 14 dans celui-ci au moyen de la liaison filetée 20. En basculant l'étrier autour de la colonnette 14 dans le sens de la flèche E de la Figure 2 on dégage l'accès au support fixe et on place l'élément de friction 40 dans les rainures 58 formées dans le support fixe 12 en introduisant l'élément de friction 40 dans le sens de la flèche B de la Figure 1. L'étrier étant basculé dans les sens de la flèche E de la Figure 2, on présente par l'intérieur de l'étrier l'élément de friction 42 de manière à ce que les saillies 46 pénètrent dans les ouvertures 60 et 62 de celui-ci. Par translation dans le sens de la flèche B de l'élément de friction 42 par rapport à l'étrier 10, on fait pénétrer les premières paires de surfaces d'ancrage et de coulissement 44 dans les rainures 54 formées dans l'étrier. Une progression supplémentaire dans le sens de la flèche B permet de mettre en appui l'élément de friction 42 sur le nez de l'étrier 10 comme représenté sur la Figure 1. On bascule alors l'étrier dans le sens inverse de la flèche E de la Figure 2 de manière à ce que la colonnette 16 se place en vis à vis de la liaison filetée 26 du support fixe 12. On visse alors cette colonnette 16 et on place les protecteurs 34 sur les colonnettes 14 et 16.

Les opérations de démontage se font dans l'ordre inverse des opérations qui viennent d'être décrites.

On voit de la description qui précède, qu'il n'est pas possible de faire un montage erroné des éléments de friction; en effet le support fixe 12 ne présente que des rainures 58 capables de recevoir les saillies 56 de l'élément de friction intérieur 40 et il ne comporte rien qui puisse coopérer avec les saillies 46. De même, en ce qui concerne l'élément de friction extérieur 42, l'étrier ne comporte que des rainures 54 capables de recevoir les saillies 46 et les surfaces de coulissement 50 et 52 et par conséquent les saillies 56 ne peuvent aucunement être utilisées pour l'élément de friction extérieur 42. Le positionnement sûr est donc garanti et on notera que le détrompage et le décalage des éléments de friction est obtenu très simplement, à savoir les rainures 54 et 58 sont simplement brochées dans les pièces correspondantes, à savoir étrier 10 et support fixe 12; on notera également que ce brochage est rendu possible sur des faibles longueurs du fait en particulier des ouvertures 60 et 62 de l'étrier 10 et de la forme du nez d'étrier qui permet aux broches de passer de part et d'autre de cet étrier.

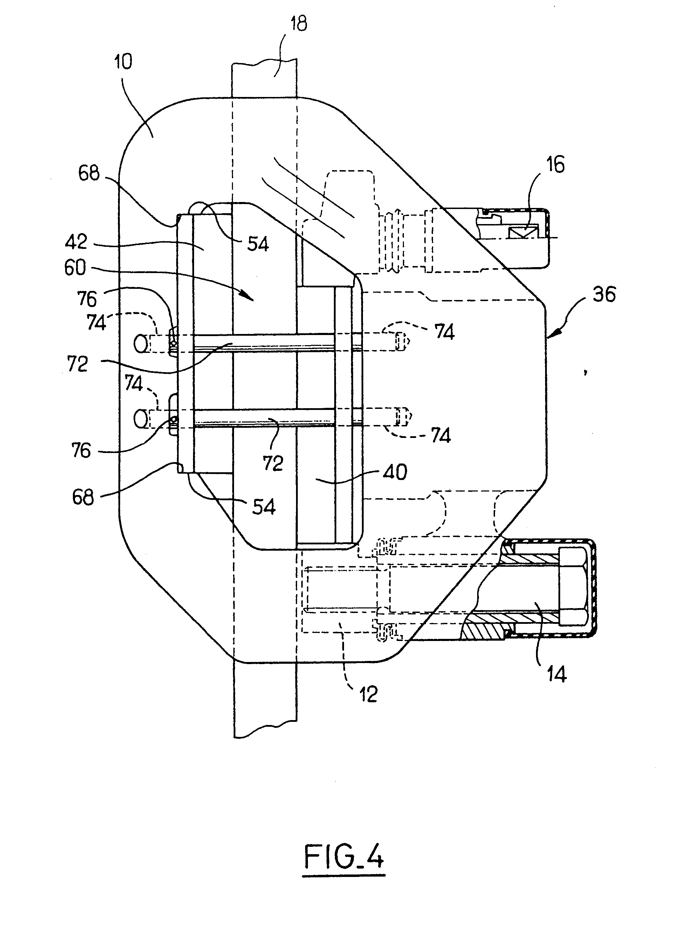

En se reportant aux Figures 4 à 6, sur lesquelles on a représenté un deuxième mode de réalisation de l'invention, les mêmes éléments remplissant la même fonction portent les mêmes références.

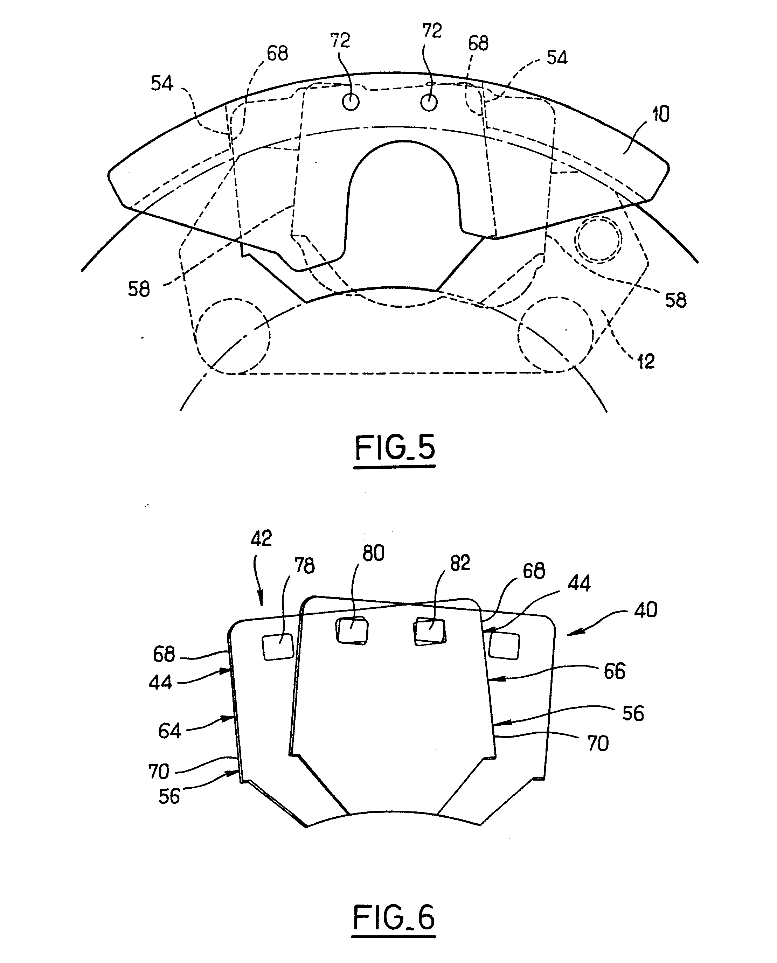

Dans ce deuxième mode de réalisation, les éléments de friction présentent des bords circonférentiellement espacés parallèles 64 et 66, chacun desquels comportant une première zone plane 68 et une seconde zone plane 70 radialement espacées, les zones 68 formant la première paire de surfaces d'ancrage et de coulissement les zones 70 formant la deuxième paire de surfaces de coulissement et d'ancrage. Comme on le voit sur les Figures 4 et 5, l'élément de friction extérieur 42 prend appui sur des surfaces conjuguées 54 formées sur l'étrier 10. De même, l'élément de friction intérieur 40 est placé en vis à vis de surfaces conjuguées 58 formées dans le support fixe 12 et placées radialement vers l'intérieur par rapport aux surfaces 54. Les surfaces 58 forment la deuxième paire de surfaces conjuguées. Dans le mode de réalisation des Figures 4 à 6, les éléments de friction 40 et 42 sont maintenus par rapport à l'étrier au moyen d'au moins une tige, en l'espèce deux tiges 72 pénétrant dans des perçages 74 formés dans l'étrier 10. Ces tiges 72 sont immobilisées d'une façon conventionelle au moyen d'épingles 76 traversant des orifices formés sur ces tiges et venant en appui axial d'une part sur l'élément de friction extérieur 42 et d'autre part sur le fond d'une encoche formée dans le nez de l'étrier 10. En se reportant aux Figures 5 et 6 on voit que les éléments de friction 40 et 42 comportent chacun trois ouvertures, 78, 80 et 82 pour l'élément de friction 42 tel que représenté sur la Figure 6, les trois ouvertures étant placées d'une telle manière que deux d'entre elles, 80 et 82 pour l'élément de friction 42, reçoivent les tiges 72, l'élément de friction 40 recevant également symétriquement les tiges 72, les ouvertures 78, 80 et 82 ainsi que les tiges 72 formant les moyens de maintien radial des éléments de friction. De même que pour le mode de réalisation précédent, les patins étant identiques, il ne peut être question d'une erreur de montage des éléments de friction.

En effet, dans ce mode de réalisation, le montage des éléments de friction ne se faisant qu'après assemblage des colonnettes 14 et 16, l'introduction des éléments de friction se fait dans le sens radial vers l'intérieur au travers de l'ouverture 60 et l'étrier, l'élément de friction 40 étant introduit radialement jusqu'à ce qu'il prenne se place dans le support fixe 12, le patin extérieur 42 étant introduit toujours au travers de l'ouverture 60 entre les bords 54 formant une première paire de surfaces conjuguées jusqu'à ce que les tiges 72 puisent être introduites au travers des perçages 74 et des ouvertures 80 et 82, puis des ouvertures correspondantes de l'élément de friction 40 et enfin dans les perçages 74 formés dans l'étrier du côté du moteur de frein 36, tout autre montage étant impossible.

Au vu de la description qui précède, on voit que grâce à l'invention, l'ensemble patin et support de couple est réalisé de manière à obtenir le décalage tangentiel voulu sans risque d'erreurs de montage, en particulier grâce au fait que les patins sont tous identiques et que ceux-ci comportent deux paires de surfaces d'ancrage chacune d'elles n'étant utilisée que pour une fonction déterminée, à savoir élément de friction intérieur ou élément de friction extérieur. Le décalage pour un frein symétrique étant obtenu par conformage symétrique de l'étrier et du support fixe.

Il est bien entendu que l'invention n'est pas limitée aux deux modes de réalisation décrits et que des modifications peuvent être apportées sans sortir du cadre de la présente invention. En particulier les formes des première et deuxième paires de surfaces d'ancrage et de coulissement peuvent être modifiées, le moteur de frein peut être hydraulique ou/et mécanique et bien entendu les éléments de friction peuvent également être reçus tous les deux dans l'étrier sans sortir pour celà du cadre de l'invention. De même, dans les modes de réalisation conformément aux Figures 4 à 6, le nombre des tiges peut être réduit à une seule, auquel cas les éléments de friction comportent avantageusement deux ouvertures seulement 78 et 80, ou porté à trois, auquel cas les éléments de friction comportent chacun quatre ouvertures de passage des tiges.

**Revendications**

1. Ensemble patin (40, 42) et support de couple (10, 12) pour frein à disque comportant un étrier (10) coulissant sur un support fixe (12) au moyen d'au moins une colonnette axiale (14) s'étendant parallèlement à l'axe du disque (18), un moteur de frein (36) agissant directement sur un élément de friction interne (40) et, par réaction au travers de l'étrier (10), sur un élément de friction externe (42), lesdits éléments de friction étant décalés tangentiellement de part et d'autre d'un plan radial (Pr) passant par l'axe du moteur de frein (36), caractérisé en ce que les éléments de friction (40, 42) sont identiques, chacun comprenant des première et deuxième paires de surfaces d'ancrage et de coulissement (44, 56) coplanaires et décalées radialement l'une par rapport à l'autre, coopérant respectivement avec des première et deuxième paires de surfaces conjuguées (54, 58) formées dans ledit support de couple, la première paire de surface d'ancrage de l'élément de friction interne (40) coopérant avec une première paire de surfaces conjuguées (54) formées dans le support fixe (12) tandis que la deuxième paire de surfaces d'ancrage de l'élément de friction externe (42) coopère avec une deuxième paire (58), de surfaces conjuguées formée dans l'étrier (10).

2. Ensemble selon la revendication 1, pour un véhicule dont les deux freins d'un même essieu sont conformés symétriquement par rapport à l'axe longitudinal du véhicule, caractérisé en ce que lesdits éléments de friction (40, 42), identiques sont montés dans les supports de couple respectifs de façon à être symétriques deux à deux par rapport à l'axe longitudinal du véhicule.

3. Ensemble selon l'une des revendications 1 et 2, caractérisé en ce que lesdites premières paires (44, 54) sont plus éloignées radialement que lesdites deuxièmes paires (56, 58).

4. Ensemble selon l'une des revendications 1 à 3, caractérisé en ce qu'il comporte des moyens de maintien radial (44, 54–56, 58; 72, 78, 80, 82) des éléments de friction (40, 42).

5. Ensemble selon la revendication 4, caractérisé en ce que lesdits moyens de maintien sont formés par lesdits paires de surfaces (44, 54; 56, 58) présentant des saillies (44, 56) et des creux (54, 58) s'étendant circonférentiellement et susceptibles de coopérer pour prévenir l'échappement radial des éléments de friction (40, 42).

6. Ensemble selon la revendication 5, caractérisé en ce que lesdites saillies (44, 56) sont formées sur les éléments de friction (40, 42) et lesdits creux (54, 58) sont formés par le support de couple (10, 12) au moyen de rainures.

7. Ensemble selon la revendication 4, caractérisé en ce que les moyens de maintien sont formés par au moins une tige (72) s'étendant axialement au-dessus de la périphérie du disque et coopérant d'une part avec le support de couple et d'autre part avec une ouverture parmi au moins deux ouvertures (78, 80) formées dans chaque élément de friction (40, 42).

8. Ensemble selon la revendication 7 caractérisé en ce que les moyens de maintien sont formés par deux tiges (72) coopérant d'une part avec le support de couple (10) et d'autre part avec deux ouvertures parmi trois ouvertures (78, 80, 82) formées dans chaque élément de friction (40, 42).

9. Ensemble selon la revendication 8, caractérisé en ce que les bords circonférentiellement espacés (64, 66) des éléments de friction (40, 42) sont sensiblement parallèles et comprennent chacun deux zones planes (68, 70) radialement espacées formant lesdites première et deuxième (56) paires de surfaces d'ancrage et de coulissement.

**Patentansprüche**

1. Anordnung aus Bremsbacken (40, 42) und Bremsmomentabstützung (10, 12) für eine Scheibenbremse mit einem Bremssattel (10), der auf einem Bremsträger (12) mittels mindestens eines axialen Bolzens (14) gleitet, der sich parallel zur Achse der Bremsscheibe (18) erstreckt, einem Bremsmotor (36), der unmittelbar auf einen inneren Reibkörper (40) und durch Reaktion über den Bremssattel (10) auf einen äusseren Reibkörper (42) einwirkt, wobei die beiden Reibkörper tangential beidseitig zu einer durch die Achse des Bremsmotors (36) verlaufende Radialebene (Pr) versetzt sind, dadurch gekennzeichnet, dass die Reibkörper (40, 42) gleich ausgebildet sind, wobei jeder Reibkörper erste und zweite Paare von Verankerungs- und Gleitflächen (44, 56) aufweist, welche koplanar und radial gegeneinander versetzt sind und jeweils mit ersten und zweiten Paaren von in der Bremsmomentabstützung gebildeten, einander zugeordneten Flächen (54, 58) zusammenwirken, wobei das erste Paar von Verankerungsflächen des inneren Reibkörpers (40) mit einem ersten Paar von im Bremsträger (12) gebildeten, einander zugeordneten Flächen (54) zusammenwirkt, während das zweite Paar von Verankerungsflächen des äusseren Reibkörpers (12) mit einem zweiten Paar (58) von im Bremssattel (10) gebildeten, einander zugeordneten Flächen zusammenwirkt.

2. Anordnung nach Anspruch 1 für ein Fahrzeug, dessen beide Bremsen derselben Achse bezüglich der Längsachse des Fahrzeuges symmetrisch ausgebildet sind, dadurch gekennzeichnet, dass die gleich ausgebildeten Reibkörper (40, 42) in den entsprechenden Bremsmomentabstützungen so angebracht sind, dass sie paarweise bezüglich der Längsachse des Fahrzeuges symmetrisch sind.

3. Anordnung nach Anspruch 1 oder 2, dadurch gekennzeichnet, dass die besagten ersten Paare (40, 54) eine grössere Radialerstreckung als die zweiten Paare (56, 58) haben.

4. Anordnung nach einem der Ansprüche 1 bis 3, dadurch gekennzeichnet, dass sie radiale Haltemittel (44, 54–56, 58; 72, 78, 80, 82) für die Reibkörper (40, 42) aufweist.

5. Anordnung nach Anspruch 4, dadurch gekennzeichnet, dass die Haltemittel von den besagten Flächenpaaren (44, 54; 56, 58) gebildet werden, welche Vorsprünge (44, 56) und Hohlräume (54, 58) aufweisen, die sich in Umfangsrichtung erstrecken und derart zusammenwirken, dass sie ein radiales Entweichen der Reibkörper (40, 42) verhindern.

6. Anordnung nach Anspruch 5, dadurch gekennzeichnet, dass die Vorsprünge (44, 56) an den Reibkörpern (40, 42) gebildet sind und die Hohlräume (44, 58) von der Bremsmomentabstützung (10, 12) mittels Nuten gebildet werden.

7. Anordnung nach Anspruch 4, dadurch gekennzeichnet, dass die Haltemittel von mindestens einer Stange (72) gebildet werden, die sich axial über den Umfang der Bremsscheibe hinaus erstreckt und einerseits mit der Bremsmomentabstützung und andererseits mit einer Öffnung von mindestens zwei Öffnungen (78, 80) zusammenwirkt, die in jedem Reibkörper (40, 42) gebildet sind.

8. Anordnung nach Anspruch 7, dadurch gekennzeichnet, dass die Haltemittel von zwei Stangen (72) gebildet werden, die einerseits mit der Bremsmomentabstützung (10) und andererseits mit zwei Öffnungen von drei Öffnungen (78, 80, 82) zusammenwirken, die in jedem Reibkörper (40, 42) gebildet sind.

9. Anordnung nach Anspruch 8, dadurch gekennzeichnet, dass die in Umfangsrichtung beabstandeten Ränder (64, 66) der Reibkörper (40, 42) im wesentlichen parallel verlaufen und jeweils zwei radial beabstandete ebene Bereiche (68, 70) aufweisen, die die besagten ersten und zweiten (56) Paare von Verankerungs- und Gleitflächen bilden.

## Claims

1. A brake pad (40, 42) and torque support (10, 12) assembly for a disk brake comprising a caliper (10) sliding on a fixed support (12) by means of at least one axial pin (14) extending parallel to the axis of the disk (18), a brake motor (36) acting directly upon an internal friction member (40) and by reaction via the caliper (10) upon an external friction member (42), said friction members being tangentially offset on either side of a radial plane (Pr) passing through the axis of the brake motor (36), characterized in that the friction members (40, 42) are identical, each comprising first and second pairs of anchoring and sliding surfaces (44, 56) which are coplanar and radially offset with respect to each other and cooperating, respectively, with first and second pairs of mating surfaces (54, 58) formed in said torque support, the first pair of anchoring surfaces of the internal friction member (40) cooperating with a first pair of mating surfaces (54) formed in the fixed support (12) while the second pair of anchoring surfaces of external friction member (42) cooperates with a second pair (58) of mating surfaces formed in the caliper (10).

2. Assembly according to claim 1 for a vehicle having two brakes on a same axis which are symmetrical with respect to the longitudinal axis of the vehicle, characterized in that said identical friction members (40, 42) are mounted in the respective torque supports such as to be symmetrical two by two with respect to the longitudinal axis of the vehicle.

3. Assembly according to any of claims 1 and 2, characterized in that said first pairs (44, 54) are radially more elongated than said second pairs (56, 58).

4. Assembly according to any of claims 1 to 2, characterized in that it comprises means (44, 54–56, 58; 72, 78, 80, 82) for radially maintaining the friction members (40, 42).

5. Assembly according to claim 4, characterized in that said maintaining means are formed by said pairs of surfaces (44, 54; 56, 58) comprising projections (54, 56) and cavities (54, 58) extending circumferentially and adapted to cooperate in order to prevent radial removal of the friction members (40, 42).

6. Assembly according to claim 5, characterized in that said projections (44, 56) are formed on the friction members (40, 42) and said cavities (54, 58) are formed by the torque support (10, 12) by means of grooves.

7. Assembly according to claim 4, characterized in that the maintaining means are formed by at least one rod (72) axially extending beyond the periphery of the disk and cooperating on the one and and with the torque support and on the other hand with one opening of at least two openings (78, 80) formed in each friction member (40, 42).

8. Assembly according to claim 7, characterized in that the maintaining means are formed by two rods (72) cooperating on the one hand with the torque support (10) and on the other hand with openings of three openings (78, 80, 82) formed in each friction member (40, 42).

9. Assembly according to claim 8, characterized in that the circumferentially spaced edges (64, 66) of the friction members (40, 42) are substantially parallel and each comprising two radially spaced planar zones (68, 70) forming said first and second (56) pairs of anchoring and sliding surfaces.

## FIG_1

FIG.2

FIG.3

FIG_4

FIG_5

FIG_6